**Europäisches Patentamt**

**European Patent Office**

**Office européen des brevets**

(11) Publication number: **0 272 267**
**B1**

# (12) EUROPEAN PATENT SPECIFICATION

(45) Date of publication of patent specification: **06.02.91**

(21) Application number: **86906023.6**

(22) Date of filing: **14.10.86**

(86) International application number:
**PCT/SE86/00473**

(87) International publication number:
**WO 87/02354 23.04.87 Gazette 87/09**

(51) Int. Cl.⁵: **C 04 B 7/147, C 04 B 7/153**

## (54) METHOD OF PREPARING BUILDING MATERIALS.

(30) Priority: **14.10.85 SE 8504754**

(43) Date of publication of application:
**29.06.88 Bulletin 88/26**

(45) Publication of the grant of the patent:
**06.02.91 Bulletin 91/06**

(84) Designated Contracting States:
**AT BE CH DE FR GB IT LI LU NL SE**

(56) References cited:
**GB-A- 347 357**

**Derwent's abstract no. 88793 D/48, SU
808461(MINE CONS ORGA) 28 02 81
Derwent's abstract no. 73160 C/41, SU 718 39
(BR MINE CON) 020380**

(73) Proprietor: **KURZ, Fredrik, W., A.
Nysätravägen 12
S-181 61 Lidingö (SE)**

(72) Inventor: **KURZ, Fredrik, W., A.
Nysätravägen 12
S-181 61 Lidingö (SE)**

(74) Representative: **Jörneld, Bo et al
L.A. Groth & Co AB Västmannagatan 43
S-113 25 Stockholm (SE)**

**The file contains technical information
submitted after the application was filed and
not included in this specification**

Courier Press, Leamington Spa, England.

# EP 0 272 267 B1

**Description**

Portland cement is generally considered as the best hydraulic binder, which only by addition of water hardens to form a rock-like material (concrete) within a few hours to obtain finally its ultimate strength within about one month. The effect is due mainly to chemical reactions between basic lime and silicic acid. Analysis of Portland cement shows about 64% CaO, 20% $SiO_2$, 2.5% MgO, 6% $Al_2O_3$ 3.5% $Fe_2O_3$+FeO, 2% $K_2O$+$Na_2O$, 1.5% $SO_3$. A disadvantage of cement is that not all lime is bound in the concrete and that a consistently appearing excess of unstable hydrate of lime which is formed towards the end of the hardening process, is relatively easily leached out by the action of water and carbon dioxide in the air, involving a danger of detrimental carbonization. Furthermore, the chemical resistance to acidic and basic attack is very limited.

Example:
Destruction of concrete surfaces on roads by road salts or of concrete bridges by sea-water. Risk of rust attack on steel reinforcement and great difficulties with glass fibre reinforcement.

To avoid the sometimes disturbing weaknesses of Portland cement, materials having a similar composition but with an enhancement of the components improving both the physical and the chemical resistance have long been sought. It was natural to experiment with finely ground granulated basic blast-furnace slag as it has a high percentage of highly resistant substances. The analysis is as follows, varying with the source: about 30 to 40% CaO, 35 to 40% $SiO_2$, 7 to 10% MgO, 10 to 20% $Al_2O_3$, 0.5 to 2% $Fe_2O_3$+FeO, 1 to 2% $K_2O$+$Na_2O$, 0.5 to 3% $SO_3$. Compared to Portland cement, the lime content is only about ½, but $SiO_2$ and $Al_2O_3$ is about double, and MgO almost 4 times higher. These substances, however, impart to silicates the highest mechanical and chemical resistance, i.e., increased compressive and tensile strength and resistance to chemical action.

Blast furnace slag is obtained largely as a useless residual product in the manufacture of iron and steel and is present internationally in hundreds of millions of tons. "Granulated" generally means "subdivided", but in connection with slag it is commonly meant that the slag in a still red-hot state has been subjected to rapid cooling with water or with a combination of cold water and cold air, whereby the slag becomes vitreous and amorphous. In spite of the favorable chemical composition the finely ground granular blast-furnace slag is only "latently" hydraulic, i.e. it dbes not bind directly after admixture with water. The reason is that a dense gel rich in silicic acid is formed, said gel enclosing the slag grains and preventing hydration. A condition for accomplishing activation is that this gel is broken. Thus, activators have a double task, they must first break down the gel and then react with the slag itself. However, the gel formation also has a positive effect, since the gel pores are uniformly distributed, whereby a better resistance to frost is obtained than with capillary pores in Portland cement concrete.

Already toward the end of the nineteenth century attempts to activate blast-furnace slag were made. The oldest patent goes back to 1892 (Passow), wherein a mixture of slag with Portland cement is recommended and wherein the free lime in the form $Ca(OH)_2$ formed in the final stage of hydration functions as an activator. Thereby, the reaction with slag occurs late and gives rise to a slow development of strength. Also the risk of shrinkage in cooling is rather great. This is the reason why the so-called slag cement is hardly used at present.

Derwent's abstract No. 88793D/48 discloses a composition for moulding structural units and it contains $Na_3PO_4$ to regulate setting duration and increase strength. The proposed composition comprises blast furnace basic slag, filler, dolomite, $Na_3PO_4$ and water. An essential disadvantage is that dolomite $MgCa(CO_3)_2$ contains Ca and $CO_3$ and the two latter compounds are detrimental for a building material, as discussed earlier. Dolomite is rich in calcium and an excess of lime in combination with $CO_2$ from the air results in carbonization. Furthermore, the calcium of dolomite reacts directly with phosphate forming apatite $Ca_3(PO_4)_2$, but apatite is not hydraulic and it does not act as a binder.

In addition to lime the activators known for a long time (see H. Kühl, Zement-Chemie, Berlin, 1951) are alkalies and sulfates. Hitherto, it was thought that activation with alkalies results in the highest strength values, but it results in a number of disadvantages. The long-term strength is not satisfactory, and there are great risks of shrinkage, salt deposition and carbonatization. Setting occurs too quickly, in between 20 and 30 minutes, wherefore casting in a building site is not possible. Use is limited to the manufacture of prefabricated concrete elements. Activation by alkalies also has the disadvantage that strong caustic NaOH is formed. Activation with lime or sulfates has the disadvantage of an inferior short-term strength and a risk of swelling. For all these known methods it is also difficult to control the rate of setting which is either too rapid or too slow.

With the prior art activating powders it was found that their admixture with slag powder during extended storage but also during transport will often result in some binding action. It is important to avoid this disadvantage in a novel activating system.

A much more reliable activation technique is obtained by a combination of acidic and basic components, wherein the acidic components consisting preferably of phosphates, optionally in combination with acidic sulfates, and the basic components consisting of magnesium oxide, optionally in combination with aluminium oxide, titanium oxide, zirconium oxide, barium oxide and/or zinc oxide; and addition of water resulting in a hydraulic reaction.

2

Magnesium oxide has the best improving effect on silicates, as it enhances the compression and tensile strengths and the elasticity, reduces shrinkage and results in a non hygroscopic product. Normally MgO can be incorporated in silicates only by melting at a high temperature. Together with phosphates, optionally in combination with sulfates, a hydraulically acting reaction is achieved with finely ground granulated basic blast-furnace slag. The best action is obtained with calcined magnesia (fired at about 1750°C, whereby all water and carbon dioxide have been driven off). Unsuitable are MgO containing minerals, e.g. dolomite, which act more as fillers. The other metal oxides are suitably employed in an amount of 0.3 to 3% by weight, based on the dry concrete (i.e. slag+sand+aggregate) or 2 to 20% by weight based on the slag.

The acidic components are suitably included in an amount of 0.3 to 6% by weight, based on the dry concrete, or 2 to 40% by weight based on the slag.

Furthermore, it was found that the reaction will be much more active if also a detergent or nitrate is added which reduces surface tension, disperses and prevents lump formation. The same effect will be achieved by taking a phosphate having detergent action, e.g. Na tripolyphosphate. MgO and phosphate per se do not react with slag and water, only in combination.

Sometimes it is advantageous to use a combination of MgO with other earth metal oxides. $Al_2O_3$ has positive effects similar to those of MgO, improves the reactivity of the slag and its resistance to chlorides. Titanium oxide imparts resistance to acidic actions, e.g. in contaminated air (sulfur deposition), and forms resistant crystals with silica gels. $ZrO_2$ gives a reliable security against alkaline attack.

An example of an acidic sulfate is sodium bisulfate, $NaHSO_4$, which on account of its strongly acidic reaction is often used industrially instead of sulfuric acid.

The hitherto known activators mostly bind too rapidly (in the case of Portland cement too slowly), and no suitable control should be achieved. This is possible with the new method, either by addition of surface-action reducing agents or fluxing (plasticizing) agents, e.g. lignosulfonate, melamine, naphthalene-formaldehyde, sodium gluconate or the like, or by plaster of Paris or anhydrite (about 3% by weight, based on the slag) or by mixing different phosphates having different times of reaction. Thus, it will be possible to obtain a binding agent which will harden within half an hour for prefabricated concrete elements, whereby more castings can be made per day, or it will be possible to increase the binding time to about 2.5 hours which will be necessary for casting on a building site.

By the addition of amorphous silicic acid, e.g. in the form of the filtered residual product from electrometallurgical processes (such as silicon ferrosilicon or silicon chrome manufacture), having an $SiO_2$ content between 75 and close to 100% and usually a specific area of at least 20 $m^2/g$, so called silica fume or silica, the compressive strength and density can be further improved, preferably in combination with plasticizing agents.

The amorphous silicic acid is suitably used in an amount of 0.6 to 2% by weight, based on the dry concrete or 4 to 15% by weight, based on the slag.

The novel material is denser than concrete from Portland cement, is brighter in colour and lighter in weight. The new concrete can also be used as a plaster or porous or light-weight concrete, if a pore-forming agent or light-weight aggregate of the type of perlite or vermiculite is added. Of course, it is possible to admix light-weight aggregate, or steel, glass, mineral or plastic fibres or fly ash. A combination with bitumen (asphalt) is possible.

The advantage of the improved slag concrete according to the present invention as compared to common concrete from Portland cement is above all a higher compressive and tensile strength, as seen from the table below. This includes both a higher short-term strength which enables removal of moulds in building sites to be carried out after about 10 hours for wall mouldings and after about 16 hours for vault mouldings, which results in great savings, and also an increasing strength for several months, while conventional concrete reaches maximum values after about 28 days.

The resistance to salt was tested at Chalmers Institute of Technology in Gothenburg, Sweden, for 4 months in a 30% calcium chloride solution. No deterioration or cracking could be observed, as occurs in common concrete after a few weeks in highly concentrated calcium chloride solution.

Protection against attack by rust is achieved in common concrete by the free lime in the form of $Ca(OH)_2$ formed in the final stages of hydration being deposited on the steel surfaces and protecting by its high pH the steel from oxidation by penetration of water, oxygen or $CO_2$ from the air. However, calcium hydroxide is an unstable substance which is dissolved by water and converted by $CO_2$ (carbonatization). In the new concrete, MgO which has a higher pH than lime forms the rust protection. Calcined MgO is rseistant to water, oxygen and $CO_2$ and therefore more reliable than lime. In addition, the new concrete is much denser (less porous) and therefore makes more resistance to penetrating water, oxygen or $CO_2$, which also results in an improved adherence to the steel reinforcement. The stability of the high pH value in the new concrete was also checked at Chalmers Institute of Technology, Sweden, by means of a bath of phenolphthalein which is a pH indicator. Permanent high pH is seen from unchanged red colour which is not the case with Portland cement concrete.

The combination of MgO and phosphate is hitherto known mostly from the manufacture of refractory ceramics but will also result in an improved fire-resistance of the activated blast-furnace slag. Usual concrete does not withstand temperatures higher than about 500°C.

The reason for the sensitivity to high temperatures of Portland cement is substantially the presence of chemically bound water. The physically bound water (capillary water) is removed at about 105°C without any deleterious action. The chemically bound water is released later, but with cracking which will then result in decomposition. The unstable free lime $Ca(OH)_2$ will be converted into $CaCO_3$ and $H_2O$. At the same time the liberated water will also attack the tri- and dicalcium silicates formed during hydration which will be converted into unstable calcium silicate hydrate. In addition, the alpha phase of quartz ($SiO_2$) present in the concrete will be converted into a different crystal form with increase in volume, which will also contribute to cracking (see R. K. Iler "Chemistry of Silicates"). In the combination of blast-furnace slag, phosphate and MgO there is no free lime and the $SiO_2$ of the granulated slag is amorphous, wherefore these risks are not present. In uses where temperatures above 1000°C can occur, it may be suitable to replace the stone material of aggregates which may expand in heat, with refractory ceramic materials. This is needed only in an exceptional case.

The new concrete may also be combined with bitumen (asphalt) in road pavings.

As examples of the action of the novel combination of activators with regard to compressive and tensile strengths, reference may be made to the following test results obtained with a mixture of 100 units of slag, 10 units of Na tripolyphosphate, 7.5 units of MgO, 353 units of sand and 40 units of water.

| Age | Compressive strength MPa | Tensile strength MPa |
|---|---|---|
| 1 day | 6.2 | 1.2 |
| 3 days | 26.0 | 3.7 |
| 7 days | 40.9 | 6.3 |
| 28 days | 81.3 | 10.4 |

These values are more advantageous than the corresponding values of Portland cement (after 28 days 49.0 and 7.9 MPa, respectively). By the additions mentioned above, the tabled values can be further improved.

As compared to Portland cement concrete the novel concrete achieves the following advantages.

1. Higher mechanical resistance, i.e. higher compressive and tensile strengths.
2. Higher chemical resistance.
3. No carbonatization, i.e. precipitation of unbound lime, which may result in deterioration of the concrete.
4. No salt attack. A road paving will not be damaged by road salt. A higher life for concrete bridges. A possibility of making resistant concrete boats.
5. Not alkaline in spite of pH 12. No unbound lime, wherefore reinforcement by glass fibres is possible. (If desired, a special type with $ZrO_2$ may be manufactured).
6. Lighter than Portland cement concrete, therefore structures may be made thinner.
7. The possibility of making thinner layers or thickness makes the construction cheaper, apart from the fact that slag is cheaper than Portland cement.
8. Much denser.
9. Better adherence to steel and better protection against rusting of the steel adhered to the concrete.
10. Higher refractoriness (fire resistance).
11. Resistance to frost.
12. Facilitates casting in cold weather.
13. The characteristics also enables it to be used in sealing compounds.
14. Better material than cement mortar for plastering.
15. Lower requirements for moist hardening of freshly cast concrete.
16. Similar to usual concrete, the new material may be rendered porous to obtain a light-weight concrete which has great advantages as compared to traditional porous concrete and light-weight concrete, since the cell structure is mechanically stronger and the new material is not hygroscopic.
17. Lighter colour.

## Claims

1. A method of making a building material by activation of latently hydraulic finely ground granulated amorphous basic blast-furnace slag to form a direct acting hydraulic binder, characterized by mixing the slag, in addition to water, sand and other aggregates, with an activator consisting of a combination of acidic and basic components, wherein the acidic components are phosphates, optionally in combination with acidic sulfates, and the basic components are magnesium oxide, optionally in combination with aluminium oxide, titanium oxide, zirconium oxide, barium oxide and/or zink oxide, wherein the process is free of heating at a high temperature, wherein a concrete of great mechanical strength and high chemical resistance is formed.

2. A method according to Claim 1, characterized by adding surface-tension reducing agents.

3. A method according to Claim 1 or 2, characterized in that the basic components are present in an amount of 0.3 to 3% by weight based on the dry concrete or 2 to 20% by weight based on the slag.

4. A method according to any of Claims 1 to 3, characterized in that the acidic components consist of sodium tripolyphosphate, optionally in admixture with other phosphates or with an acidic sulfate, such as $NaHSO_4$ in an amount of 0.3 to 6% by weight based on the dry concrete or 2 to 40% by weight based on the slag.

5. A method according to any of Claims 1 to 4, characterized by adding agents controlling the binding period, such as plaster of Paris or anhydrite and/or plasticizing agents in an amount of less than 3% by weight based on the slag.

6. A method according to any of Claims 1 to 5, characterized by adding amorphous silicic acid, e.g. as the filtered amorphous residual product from electro-metallurgical processes, such as from the manufacture of silicion, ferrosilicon or chromium silicide, having an $SiO_2$ content of from 75% and up to almost 100% and a specific area of at least 20 $m^2/g$, so-called silica fume or silica, in an amount of 0.6 to 2% by weight, based on the dry concrete or 4 to 15% by weight, based on the slag.

7. A method according to any of Claims 1 to 6, characterized by adding steel, glass, mineral or plastic fibre reinforcement or pore-forming agents or light-weight aggregate.

## Patentansprüche

1. Verfahren zur Herstellung eines Baumaterials durch Aktivierung von latent hydraulischer, feingranulierter amorpher basischer Hochofenschlacke zur Bildung eines direkt wirkenden hydraulischen Bindemittels, gekennzeichnet durch Mischung der Schlacke, zusätzlich zu Wasser, Sand und anderen Zusätzen, mit einem aus einer Kombination von basischen und sauren Bestandteilen bestehenden Aktivator, wobei die sauren Bestandteile Phosphate sind, gegebenenfalls in Kombination mit sauren Sulfaten, und die basischen Bestandteile Magnesiumoxyd sind, gegebenenfalls in Kombination mit Aluminiumoxyd, Titanoxyd, Zirkoniumoxyd, Bariumoxyd und/oder Zinkoxyd, und wobei der Prozeß ohne Erwärmung bei hoher Temperatur abläuft und Beton von großer mechanischer Festigkeit sowie hohem chemischen Widerstand gebildet wird.

2. Verfahren nach Patentanspruch 1, gekennzeichnet durch Zusatz von die Oberflächenspannung reduzierenden Bestandteilen.

3. Verfahren nach Patentanspruch 1 oder 2, dadurch gekennzeichnet, daß die basischen Bestandteile in einer Menge von 0,3 bis 3 Gewichts-% basierend auf Trockenbeton oder 2 bis 20 Gewichts-% basierend auf Schlacke anwesend sind.

4. Verfahren nach einem der Patentansprüche 1 bis 3, dadurch gekennzeichnet, daß die sauren Bestandteile aus Natriumtripolyphosphat bestehen, gegebenenfalls unter Zumischung von anderen Phosphaten oder eines sauren Sulfats, wie $NaHSO_4$ in einer Menge von 0,3 bis 6 Gewichts-% basierend auf Trockenbeton oder 2 bis 40 Gewichts-% basierend auf Schlacke.

5. Verfahren nach einem der Patentansprüche 1 bis 4, gekennzeichnet durch Zusatz von Mitteln, welche die Abbindungszeit steuern, wie Gips oder Anhydrit und/oder plastizierende Mittel in einer Menge von weniger als 3 Gewichts-% basierend auf Schlacke.

6. Verfahren nach einem der Patentansprüche 1 bis 5, gekennzeichnet durch Zusatz von amorpher Kieselsäure, wie z.B. das gefilterte amorphe Rückstandsprodukt von elektrometallurgischen Prozessen, wie von der Silizium-, Siliziumeisen- oder Siliziumchromherstellung mit einem $SiO_2$-Gehalt von 75% bis zu fast 100% und einer spezifischen Oberfläche von wenigstens 20 $m^2/g$, von sogenanntem Kieselstaub oder von Silica in eine Menge von 0,6 bis 2 Gewichts-% basierend auf Trockenbeton oder 4 bis 15 Gewichts-% basierend auf Schlacke.

7. Verfahren nach einem der Patentansprüche 1 bis 6, gekennzeichnet durch Zusatz von Stahl-, Glas-, Mineral- oder Kunststoffaserarmierung oder von porenbildenden Mitteln oder von Leichtgewichtsaggregaten.

## Revendications

1. Procédé de préparation d'un matériau de construction par activation de scories de haut fourneau, hydrauliques de manière latente, finement granulées par broyage, amorphes, basiques, pour former un liant hydraulique à action directe, caractérisé en ce que les scories sont mélangées, avec outre de l'eau, du sable et d'autres agrégats, avec un activateur consistant en une combinaison de composants acides et basiques, selon lequel les composants acides sont des phosphates, éventuellement combinés à des sulfates acides, et les composants basiques sont de l'oxyde de magnésium, éventuellement combiné à de l'oxyde d'aluminium, de l'oxyde de titane, de l'oxyde de zirconium, de l'oxyde de baryum et/ou de l'oxyde de zinc, selon lequel l'activation ne comprend pas de chauffage à une température élevée, selon lequel un béton d'une grande solidité mécanique et d'une haute résistance chimique est formé.

2. Procédé selon la revendication 1, caractérisé en ce que des agents réduisant la tension superficielle sont ajoutés.

3. Procédé selon la revendication 1 ou 2, caractérisé en ce que les composants basiques sont présents dans une quantité de 0,3 à 3% en poids du béton sec ou 2 à 20% en poids des scories.

4. Procédé selon l'une quelconque des revendications 1 à 3, caractérisé en ce que les composants acides consistant en tripolyphosphate de sodium, éventuellement en mélange avec d'autres phosphates ou avec un sulfate acide, tel que NaHSO$_4$, dans une quantité de 0,3 à 6% en podis de béton sec ou 2 à 40% en poids des scories.

5. Procédé selon l'une quelconque des revendications 1 à 4, caractérisé en ce que des agents contrôlant l'étape d'agglomération, tels que du plâtre ou de l'anhydrite et/ou des agents plastifiants sont ajoutés dans une quantité de moins de 3% en poids des scories.

6. Procédé selon l'une quelconque des revendications 1 à 5, caractérisé en ce que de l'acide silicique amorphe est ajouté, par exemple, sous la forme du produit résiduel amorphe filtré obtenue à partir de procédés électro-métallurgiques, tels que la fabrication de silicium, de ferrosilicium ou de siliciure de chrome, ayant un taux de SiO$_2$ de 75% jusqu'à presque 100% et une surface spécifique d'au moins 20 m$^2$/g, appelé fumée de silice ou silice, dans une quantité de 0,6 à 2% en poids de béton sec ou 4 à 15% en poids des scories.

7. Procédé selon l'une quelconque des revendications 1 à 6, caractérisé en ce qu'un renfort en acier, verre, fibres minérales ou plastiques ou des agents porogènes ou un agrégat léger sont ajoutés.